# EUROPÄISCHE PATENTSCHRIFT

(11) **EP 1 502 762 B1**
(45) Veröffentlichungstag und Bekanntmachung des Hinweises auf die Patenterteilung: **04.10.2006**
(21) Anmeldenummer: 04012457.0
(22) Anmeldetag: 26.05.2004
(51) Int. Cl.: B41M 5/24, B41M 5/26

(54) **Vorrichtung, Verfahren und Computerprogrammprodukt zur Lasermarkierung eines Datenträgers**
Device, method and computer program for laser-marking a data carrier
Dispositif, procédé et programme informatique pour le marquage au laser d'un support de données

(30) Priorität: 01.08.2003 DE 10336010
(43) Veröffentlichungstag der Anmeldung: 02.02.2005
(73) Patentinhaber: ORGA Systems GmbH, 33104 Paderborn (DE)
(72) Erfinder: Bormann, Frank, 33818 Leopoldshöhe (DE); Kappe, Frank, 33378 Rheda-Wiedenbrück (DE); Hennemeyer, Micheal, 33165 Herbram (DE)
(74) Vertreter: Richardt, Markus Albert

(56) Entgegenhaltungen:
- DE-A1- 10 007 391
- US-A- 5 463 200

## Beschreibung

Die Erfindung betrifft ein Verfahren zur Lasermarkierung, insbesondere eines Datenträgers, sowie ein Lasermarkierungssystem und ein entsprechendes Computerprogrammprodukt.

Zur Markierung eines Datenträgers mittels Laserstrahlung wird ein fokussierter Laserstrahl auf einen lichtempfindlichen Datenträger gerichtet, der mit einer Folge von Laserpulsen markiert wird. Die aufzubringende Markierung besteht hierbei aus einem beliebigen Bild, welches wiederum aus einer Anzahl einzelner Bildpunkte besteht. Das Material des Datenträgers ist durch zwei Schwellwerte für die Energie der Laserpulse charakterisiert. Ist die Energie eines Laserpulses geringer als der untere Schwellwert des Materials, so findet keine Markierung des Datenträgers, d. h. Verfärbung, des Datenträgers statt. Der Begriff Verfärbung ist hier im Sinne einer Farbgebung mit unterschiedlich abgestuften diskreten Werten zu verstehen. im einfachsten Fall werden mit dem Lasermarkierungsverfahren verschiedene Grauwerte auf dem Datenträger eingestellt.

Entspricht die Energie eines Laserpulses dem oberen Schwellwert des Materials, so wird der Datenträger innerhalb der vom Laser bestrahlten Fläche vollständig verfärbt. Liegt die Energie eines Laserpulses zwischen den beiden Schwellwerten, so wird der Datenträger in dem vom Laserstrahl beleuchteten Bereich nur teilweise verfärbt, d. h. es können unterschiedliche diskrete Farbwerte auf dem Datenträger erzeugt werden.

Die zur Lasermarkierung notwendigen Verfahrensschritte sind:
a) Modulation der Pulsenergie der Laserstrahlung, so dass unterschiedliche Pulsenergien zur Erzeugung unterschiedlicher auf dem Material erzeugt werden können,
b) Formung des Laserstrahls in eine erforderliche Geometrie, so dass der Fokuspunkt auf dem Material eine vorgegebene Größe, eine vorgegebene Geometrie und eine vorgegebene Pulsenergieverteilung aufweist. Gängige Pulsenergieverteilungen weisen ein gaußförmiges oder ein homogenes Flat-Top Profil auf,
c) Fokussierung und Führung des Laserstrahls auf den Datenträger, so dass eine vorgegebene Strahlungsenergie zur richtigen Zeit am richtigen Ort auf dem Datenträger zur Verfügung steht.

Im Stand der Technik wird zwischen zwei Verfahren zur Lasermarkierung unterschieden:
a) Beim sogenannten sequentiellen Verfahren, welches aus DE 100 07 391 A1 bekannt ist, werden die einzelnen Bildpunkte des Bildes sequentiell markiert. Jeder einzelne Laserpuls wird auf einen einzigen Bildpunkt gerichtet. Die Zeit, die benötigt wird, um den Datenträger mit dem vollständigen Bild zu markieren, ergibt sich aus dem Quotienten der Anzahl der Bildpunkte und der Frequenz der Intensitätsmodulation, welche durch die Pulsfolge des Lasers oder des Lichtmodulators bestimmt ist.
   Ein Nachteil dieses Verfahrens ist, dass bei vorgegebener Pulsfolge des Lasers die Zeit zur Markierung des Datenträgers proportional mit der Anzahl der Bildpunkte ansteigt. Für die Markierung eines Datenträgers mit einem hochauflösenden Bild ist dieses Verfahren daher aufgrund einer relativ langen Markierungszeit von Nachteil.
b) Beim sogenannten simultanen Verfahren werden sämtliche Bildpunkte des Bildes simultan auf dem Datenträger markiert. Hierzu muss die Pulsenergieverteilung des Laserstrahls mit Hilfe eines Lichtmodulators ortsaufgelöst moduliert werden, so dass die einzelnen Bildpunkte eine ihrer vorgegebenen Verfärbung entsprechende Lichtenergie erhalten. Die Energie eines Laserpulses wird hierzu über die gesamte Fläche des Bildes verteilt. Das bedeutet, dass zur Markierung eines Bildpunktes nicht die gesamte Pulsenergie des Lasers, sondern lediglich eine um einen Faktor reduzierte Energie verwendet werden kann. Der Faktor entspricht hierbei der Anzahl der Bildpunkte.

Nachteilig an diesem vorbekannten Verfahren ist, wenn die Energie eines einzigen Laserpulses nicht ausreicht, sämtliche Bildpunkte des Bildes zu schwärzen oder wenn die beschränkte Auflösung des Lichtmodulators kleiner als die vorgegebene Auflösung des Bildes ist.

In der DE 100 07 391 A1 sowie US 5,208,818 werden Verfahren vorgeschlagen, welche das sequentielle mit dem simultanen Verfahren kombinieren. Das Verfahren DE 100 07 391 A1 sieht einen länglichen Strahlfokus mit einer eindimensionalen, entlang seiner langen Focusachse ortsaufgelösten, Modulation der Pulsenergie vor.

Das Verfahren in US 5,208,818 sieht die Aufteilung des Bildes in mehrere überlappende Teilbilder vor, die mehrfach ortsverschoben markiert werden, um eine möglichst homogene Markierung zu erzielen.

Ein gemeinsamer Nachteil vorbekannter Lasermarkierungssysteme und Verfahren ist, dass die Geometrie des länglichen Fokus und die Geometrie der Teilbilder fest vorgegeben ist

Der Erfindung liegt demgegenüber die Aufgabe zugrunde, ein verbessertes Verfahren zur Lasermarkierung, ein verbessertes Lasermarkierungssystem sowie ein entsprechendes Computerprogrammprodukt zu schaffen.

Die der Erfindung zugrunde liegenden Aufgaben werden jeweils mit den Merkmalen der unabhängigen Patentansprüchen gelöst. Bevorzugte Ausführungsformen der Erfindung sind in den abhängigen Patentansprüchen angegeben.

Das erfindungsgemäße Verfahren ermöglicht die Lasermarkierung eines Datenträgers mit einem Bild unter dem Einsatz simultaner und sequentieller Markierungsmethoden. Das zu markierende Bild wird hierbei in einzelne, zweidimensionale Teilbilder segmentiert, so dass jedes Teilbild eine Anzahl von Bildpunkten enthält. Mit jedem Laserpuls wird nun jeweils eines der Teilbilder simultan markiert. In der Abfolge der Laserpulse wird das Bild dann sequentiell mit den Teilbildern markiert.

Im Gegensatz zum Stand der Technik können hierbei die Geometrie und die Fläche der Teilbilder oder des länglichen Fokus, zum Zweck einer optimalen Ausnutzung der zur Verfügung stehenden Energie eines Laserpulses, variabel angepasst werden. Somit kann eine deutliche Verkürzung der Markierungszeit eines Bildes realisiert werden.

Die zur Erzeugung der Teilbilder notwendige Laserstrahlmodulation wird mit Hilfe eines phasen- und/oder amplitudenmodulierenden Lichtmodulators realisiert. Besteht ein Teilbild aus n-Bildpunkten, so werden im Vergleich zum sequentiellen Verfahren mit einem Laserpuls n-Bildpunkte simultan markiert. Daraus folgt, dass sich die Zeit zur Markierung des vollständigen Bildes auf dem Datenträger um den Faktor n verkürzt. Die Schaltzeit des Lichtmodulators gibt letztlich die Frequenz vor, mit der das Bild mit den einzelnen Teilbildern sequentiell markiert wird. Im Vergleich zu einem Lasermarkierungssystem nach dem sequentiellen Verfahren bleibt hierbei die Auflösung des Bildes unverändert.

Erfindungsgemäß kommen zur Erzeugung der für die Teilbilder erforderlichen Intensitätsmodulation des Laserstrahls diffraktive, optische Elemente als Lichtmodulatoren zum Einsatz.

Nach einer bevorzugten Ausführungsform der Erfindung besteht der verwendete Lichtmodulator aus einzelnen ansteuerbaren Flüssigkristallzellen. Hierbei können sowohl antiferroelektrische, wie z. B. nematische, smektische oder cholesterische Flüssigkristalle als auch ferroelektrische Flüssigkristalle mit sehr kurzen Schaltzeiten zum Einsatz kommen. Letztere ermöglichen Modulationsfrequenzen im Bereich oberhalb 1 kHz.
Ziel ist es, den Lichtmodulator als Phasenmodulator einzusetzen. Zu diesem Zweck wird auf dem Modulator nicht das zu erzeugende zweidimensionale Teilbild, sondern ein computergeneriertes Beugungsgitter dargestellt. An diesem erfährt der Laserstrahl eine Segmentierung in mehrere Teilstrahlen, die relativ zueinander phasenverschoben sind.

Diese Teilstrahlen interferieren derart miteinander, so dass die dem Teilbild entsprechende Intensitätsmodulation auf dem Datenträger entsteht. Die am Beugungsgitter entstehenden Teilstrahlen werden in verschiedene Richtungen gebeugt, so dass sich das transmittierte Lichtfeld in Lichtfelder 0ter und Paare von Lichtfeldern +/- 1ter, +/-2ter sowie Paare höherer Ordnungen aufteilt. Diese Aufteilung und der Abstand der Beugungsordnungen ist durch die Struktur des computergenerierten Beugungsgitters auf dem Lichtmodulator vorgegeben.

Hat das Beugungsgitter z. B. ein sinusförmiges Profil, so wird die gesamte Lichtverteilung in der ersten Beugungsordnung konzentriert. Durch den Einsatz anderer Beugungsgitterstrukturen, wie z. B. eines sägezahnförmigen Beugungsprofils ist es möglich, das transmittierte Licht in nur einer einzigen Beugungsordnung zu konzentrieren.

Vorteilhaft hierbei ist insbesondere, dass die gesamte Pulsleistung des Lasers zur Markierung des Teilbildes auf dem Datenträger genutzt werden kann. Im Unterschied dazu basieren Amplitudenmodulatoren auf dem Prinzip der Maskenmarkierung, wodurch immer ein Teil des Strahls absorbiert, bzw. aus dem Strahlengang gebeugt wird.

Nach einer bevorzugten Ausführungsform der Erfindung erfährt der Lichtstrahl eine derartige Phasenmodulation, so dass die einzelnen Bildpunkte des Teilbildes eine homogene Lichtintensität erhalten. Diese ist über der Fläche eines Bildpunktes konstant und fällt an dessen Rändern abrupt ab, so dass jeder Bildpunkt eine homogene Pulsenergieverteilung mit einem sogenannten Flat-Top Profil erhält.

Nach einer bevorzugten Ausführungsform der Erfindung ist die transversale Geometrie des fokussierten Laserstrahls auf dem Datenträger nicht rund, sondern rechteckig oder quadratisch. In diesem Fall ist es möglich, die Markierung des Datenträgers so durchzuführen, dass die Teilbilder nahtlos aneinandergefügt werden können.

Nach einer weiteren bevorzugten Ausführungsform der Erfindung wird der Laserstrahl durch den Lichtmodulator intensitätsmoduliert, so dass die einzelnen Bildpunkte diskrete unterschiedliche Intensitätswerte erhalten. Dies kann zum einen dadurch realisiert werden, dass der Lichtmodulator eine solche ortsaufgelöste Intensitätsverteilung direkt erzeugt. Zum anderen kann eine solche Intensitätsmodulation dadurch erzeugt werden, dass ein Teilbild mit unterschiedlich ortsaufgelösten intensitätsmodulierten Laserpulsen mehrfach markiert wird. In diesem Fall muss gewährleistet sein, dass der Lichtmodulator zwischen zwei aufeinanderfolgenden Laserpulsen rekonfiguriert werden kann.

Nach einer weiteren Ausführungsform der Erfindung wird auch die Strahlführungseinheit durch ein diffraktives optisches Element realisiert. Der Winkel, unter dem der Laserpuls an dem Beugungsgitter des diffraktiven optischen Elementes abgelenkt wird, ist vom relativen Abstand der einzelnen Beugungsstrukturen abhängig. Je geringer der relative Abstand einzelner Beugungsstrukturen ist, desto größer ist der Ablenkwinkel den der transmittierte Laserstrahls erfährt. Ein rekonfigurierbares Beugungsgitter ermöglicht somit die beliebige Ablenkung eines Laserpulses. Daher können die einzelnen Laserpulse zur Markierung der Teilbilder mit Hilfe eines rekonfigurierbaren diffraktiven optischen Elements an die erforderliche Position auf dem Datenträger positioniert werden.

Alternativ kann die Strahllenkung auch mit einem herkömmlichen X-Y-Galvano-Scanner-Spiegel realisiert werden.

Nach einer weiteren Ausführungsform der Erfindung erfährt der Lichtstrahl zusätzlich zur transversalen Ablenkung durch das auf dem diffraktiven optischen Element dargestellte Beugungsbild eine Fokussierung. Somit ist eine weitere Fokussierung des Lichtstrahls auf den Datenträger nicht nötig. Ferner ist es damit möglich, auf das für herkömmliche Lasermarkierungssysteme, zur Strahlfokussierung benötigte, übliche Planfeldobjektiv zu verzichten.

Nach einer weiteren Ausführungsform der Erfindung können die einzelnen Beugungsbilder, die zur Strahlformung, zur Strahlführung und zur Strahlfokussierung führen, zu einem einzigen Beugungsbild kombiniert werden, welches auf einem einzigen diffraktiven optischem Element dargestellt wird. Vorteilhaft bei dieser Ausführungsform ist, dass die Formung, die Führung und die Fokussierung des Lichtstrahls mit einem einzigen diffraktiven optischem Element bewerkstelligt werden kann.

Nach einer weiteren Ausführungsform der Erfindung wird vor dem Beginn des Markierungsprozesses die Segmentierung des Bildes in die nichtüberlappenden Teilbilder von einer Steuerungseinheit berechnet. In einem weiteren Schritt werden die zur Erzeugung der Teilbilder notwendigen Beugungsbilder für den Lichtmodulator berechnet und in eine Speichereinheit, dem sogenannten Look-Up-Table abgespeichert. Nach dem Abspeichern sämtlicher Teilbilder im Look-Up-Table beginnt der Markierungsvorgang. Hierzu wird der Lichtmodulator, als auch die Strahlführungseinheit von der Steuerungseinheit synchron angesteuert. Die Steuereinheit sorgt weiterhin dafür, dass die Beugungsbilder der Teilbilder sukzessive aus dem Look-Up-Table ausgelesen, auf dem Strahlmodulator dargestellt und die Strahlführungseinheit mit den entsprechenden Ansteuersequenzen für die korrekte Positionierung der Teilbilder auf dem Datenträger angesteuert wird.

In einer bevorzugten Ausführungsform der Erfindung wird eine derartige Segmentierung des Bildes in einzelne, nichtüberlappende Teilbilder vorgenommen, so dass die Energie eines einzigen Laserpulses ausreicht, den Datenträger über die gesamte Fläche eines Teilbildes homogen und vollständig zu schwärzen. Somit wird das Bild in möglichst wenige Teilbilder segmentiert mit denen der Datenträger mit Hilfe des sequentiellen Markierungsverfahren markiert wird.

Durch diese Aufteilung in möglichst wenige Teilbilder wird somit die benötigte Zeit zur Markierung des Datenträgers mit dem Bild minimiert. Das Zeitintervall zwischen der Markierung einzelner Teilbilder ist hierbei im Wesentlichen durch die Schaltzeit des Lichtmodulators bestimmt, die im Allgemeinen größer als die Zeit zweier aufeinanderfolgender Laserpulse ist. Vorteilhaft hierbei ist der Einsatz von schaltbaren Lichtmodulatoren auf der Basis ferroelektrischer Flüssigkristalle, die besonders kurze Schaltzeiten bis zu einer zehntel Millisekunde ermöglichen.

Eine weitere bevorzugte Ausführungsform der Erfindung ermöglicht eine weitere Optimierung der Zeit zu Markierung des Datenträgers, in dem die Größe in Teilbilder in Abhängigkeit ihrer integralen Farbwertintensität variiert wird. Ausgehend von der unterschiedlichen Intensitätsmodulation eines jeden Teilbildes wird die zum Markieren der Teilbilder benötigte Energie (E1) für alle Teilbilder einzeln berechnet. Ist die zur Markierung benötigten Energie (E1) für alle Teilbilder kleiner oder gleich der Pulsenergie des Lasers, so werden die zur Erzeugung der Teilbilder notwendigen Beugungsbilder berechnet und im Look-Up-Table gespeichert.

In einem weiteren Schritt erfolgt nun die Auswahl größerer Teilbilder, für die sich die beschriebene Prozedur in gleicher Weise wiederholt, bis die zum Markieren eines Teilbildes notwendige Energie (E1) größer als die Pulsenergie des Lasers ist. In diesem Fall startet der Markierungsprozess mit dem zuletzt gespeicherten Look-Up-Table nach der oben beschriebenen Methode. Dieses besonders vorteilhafte Verfahren ermittelt selbsttätig eine Segmentierung des Bildes in größtmögliche Teilbilder zum Zwecke der Minimierung der Markierungszeit. Durch den Vergleich der zum Markieren des Teilbildes benötigten Energie (E1) mit der Energie eines Laserpulses (E2) und der ursprünglichen Segmentierung in Teilbilder, die mit einem einzigen Laserpuls komplett verfärbt werden können, ist somit gewährleistet, dass sämtliche Teilbilder mit nur einem einzigen Laserpuls auf dem Datenträger aufgebracht werden können.

Nach einer weiteren Ausführungsform der Erfindung kann ein Teilbild mehrfach mit der gleichen ortsaufgelösten Pulsenergieverteilung markiert werden, falls die zur Markierung eines Teilbildes benötigte Energie (E1) größer als die zur Verfügung stehende Pulsenergie (E2) eines Laserpulses ist. In diesem Fall kann die Fläche des Teilbildes so groß gewählt werden, dass die Energie eines einzigen Laserpulses nicht mehr ausreicht, dieses Teilbild komplett zu schwärzen.

Im Extremfall kann bei dieser Ausführungsform zum simultanen Markierungsverfahren übergegangen werden, sofern der Lichtmodulator über eine entsprechend große Ortsauflösung verfügt, die die vorgegebene Pulsenergieverteilung auf dem Datenträger erzeugen kann. In diesem Fall ist die Markierungszeit durch die Anzahl der erforderlichen Laserpulse und der Pulsfolgefrequenz des Lasers bestimmt.

Nach einer weiteren Ausführungsform der Erfindung können die Teilbilder mehrfach (kumulativ) mit verschiedenen Pulsenergieverteilungen markiert werden, so dass die einzelnen Bildpunkte unterschiedliche, diskrete Farbwerte erhalten. Somit können Bilder nicht nur aus gar nicht oder vollständig gesättigten Bildpunkten, sondern auch aus einer Fülle von Bildpunkten mit unterschiedlichen diskreten Farbwerten auf dem Datenträger aufgebracht werden. Voraussetzung hierfür ist, dass die verwendete Leistung der Laserpulse an die Größe der Teilbilder und die Materialparameter angepasst ist. Da die Verfärbung des Datenträgers in einem nicht linearen Verhältnis zur deponierten Energie steht, muss die akkumulierte Pulsenergieverteilung mehrerer Laserpulse entsprechend einer vorgegebenen Farbwertkurve angepasst werden. Ferner muss hierfür die auf den Bildpunkten deponierte Lichtenergie zwischen den beiden für die Verfärbung des Datenträgers maßgeblichen Schwellwerten liegen.

Nach einer weiteren Ausführungsform der Erfindung kann die Auswahl des Bildes in möglichst wenige Teilbilder beginnend mit dem Bild selbst als Teilbild vorgenommen werden. In einzelnen Schritten werden dann die integrale Farbwertintensität eines jeden Teilbildes und die entsprechend benötigte Energie E2 zur Markierung des Teilbildes bestimmt. Ist die benötigte Energie E2 kleiner als die Pulsenergie des Lasers E1, so kann entweder ein weiterer Optimierungsschritt eingeleitet oder aber mit der Markierung begonnen werden.
Reicht die Energie des Lasers E1 nicht zur Markierung des Teilbildes aus, so kann das Teilbilde entweder mehrfach kumulativ markiert werden und/oder eine weitere Optimierung der Unterteilung in einzelne Teilbilder erfolgen.

Im Folgenden werden bevorzugte Ausführungsformen der Erfindung mit Bezugnahme auf die Bezeichnungen näher erläutert. Es zeigen:
- Figur 1: ein Blockdiagramm eines erfindungsgemäßen Lasermarkierungssystems,
- Figur 2: ein auf den Datenträger aufzubringendes Bild mit der Unterteilung in unterschiedliche Teilbilder,
- Figur 3: ein hochaufgelöstes Bild mit einer Unterteilung in einzelne Teilbilder,
- Figur 4: ein Blockdiagramm einer bevorzugten Ausführungsform des erfindungsgemäßen Lasermarkierungssystems,
- Figur 5: ein Blockdiagramm einer weiteren bevorzugten Ausführungsform des erfindungsgemäßen Lasermarkierungsverfahrens mit einem Optimierungsverfahren zur Reduzierung der Markierungszeit,
- Figur 6: ein Blockdiagramm einer weiteren Ausführungsform des erfindungsgemäßen Lasermarkierungsverfahrens, welches eine adaptive Optimierung der Parameter Beschriftungszeit, Pulsenergie des Lasers oder der Geometrie der Teilbilder erlaubt,
- Figur 7: ein Blockdiagramm einer weiteren Ausführungsform des erfindungsgemäßen Lasermarkierungsverfahren, welches eine adaptive Optimierung der Segmentierung in Teilbilder, ausgehend von großen hin zu kleineren Teilbildern, vornimmt.

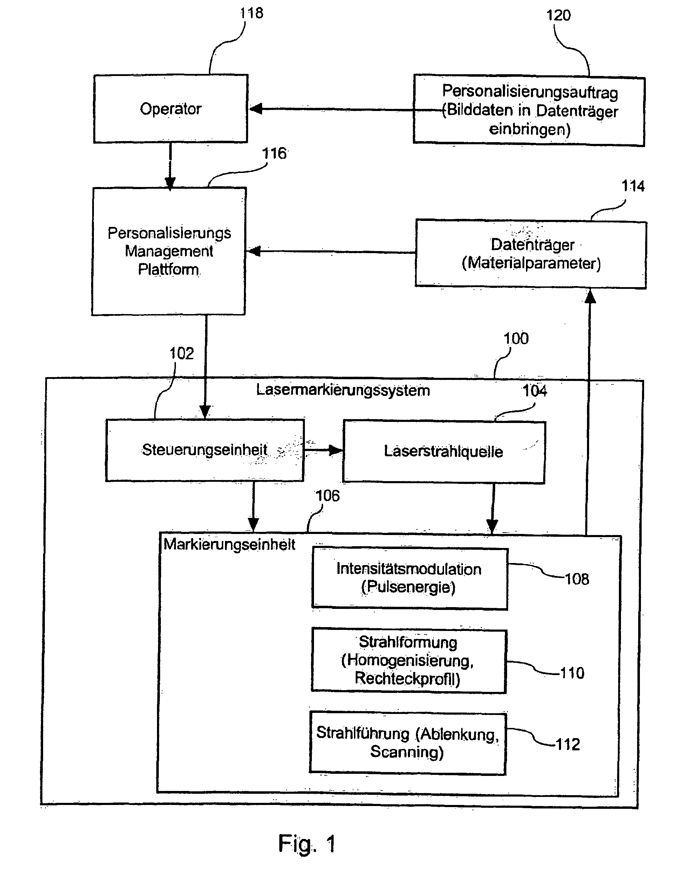

Die Figur 1 zeigt ein Lasermarkierungsverfahren, welches mittels eines Lasermarkierungssystems 100, eines Datenträgers 114, einer Personalisierungs Management Plattform 116, eines Operators 118 und eines Personalisierungsauftrags 120 durchgeführt wird. Das Lasermarkierungssystem 100 beinhaltet eine Steuerungseinheit 102, eine Laserstrahlquelle 104 und eine Markierungseinheit 106.

Die Markierungseinheit 106 besteht wiederum aus einem Modul für die Intensitätsmodulation 108, einem Modul für die Strahlformung 110 und einem Modul für die Strahlführung 112. Der Personalisierungsauftrag 120, welcher die auf dem Datenträger aufzubringenden Bilddaten beinhaltet, wird über den Operator 118 in die Personalisierungsmanagementplattform 116 eingebracht. Die Personalisierungs Management Plattform 116 verarbeitet die Bilddaten mit den bekannten Materialparametern des Datenträgers 114. Die verarbeiteten Bildinformationen sowie die Materialparameter werden von der Personalisierungs Management Plattform 116 in die Steuerungseinheit 102 des Lasermarkierungssystems 100 eingespeist. Die Steuerungseinheit 102 steuert simultan die Markierungseinheit 106 sowie die Laserstrahlquelle 104. Die Lichtpulse der Laserstrahlquelle 104 werden in die Markierungseinheit 106 eingebracht. Die Module der Markierungseinheit zur Intensitätsmodulation 108 zur Strahlformung 110 und zur Strahlführung 112 steuern nachfolgend die Intensität, die Form und die Position des Laserstrahls. Nachdem der Laserstrahl die Markierungseinheit 106 verlassen hat, markiert er den Datenträger 114 in vorbestimmter Weise.

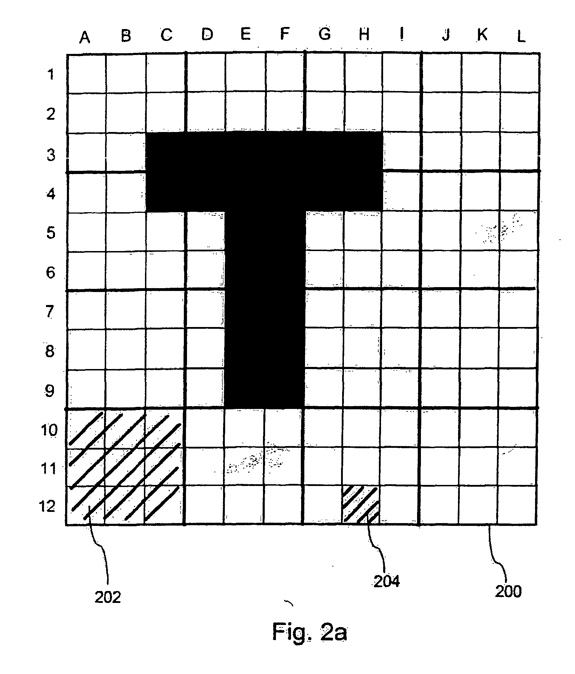

Figur 2a veranschaulicht die Aufteilung eines Bildes 200 in einzelne Teilbilder 202. Das Bild 200 sowie die Teilbilder 202 bestehen aus einzelnen Bildpunkten 204. Figur 2a zeigt die Aufteilung des Bildes 200 in sechzehn einzelne quadratische Teilbilder. Um den Datenträger vollständig mit der Bildinformation zu markieren, müssen insgesamt sieben Teilbilder unterschiedlich markiert werden.

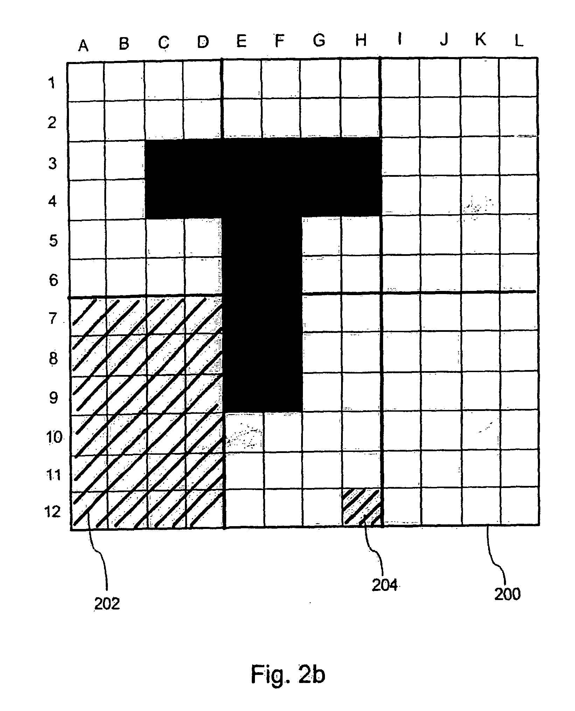

Figur 2b zeigt eine Zerlegung des Bildes 200 in sechs rechteckige Teilbilder 202. Um den Datenträger vollständig mit der Bildinformation zu markieren, müssen in diesem Fall lediglich drei Teilbilder markiert werden. Das Zeitintervall zwischen der Markierung einzelner Teilbilder ist durch die Schaltzeit des Modulators vorgegeben und wird als konstant betrachtet. Die vollständige Markierung des Datenträgers mit der Bildinformation kann nach der in Figur 2b gezeigten Aufteilung des Bildes in Teilbilder in weniger als der Hälfte der Zeit erfolgen, als dies für die Aufteilung des Bildes 200 nach Figur 2a der Fall wäre.

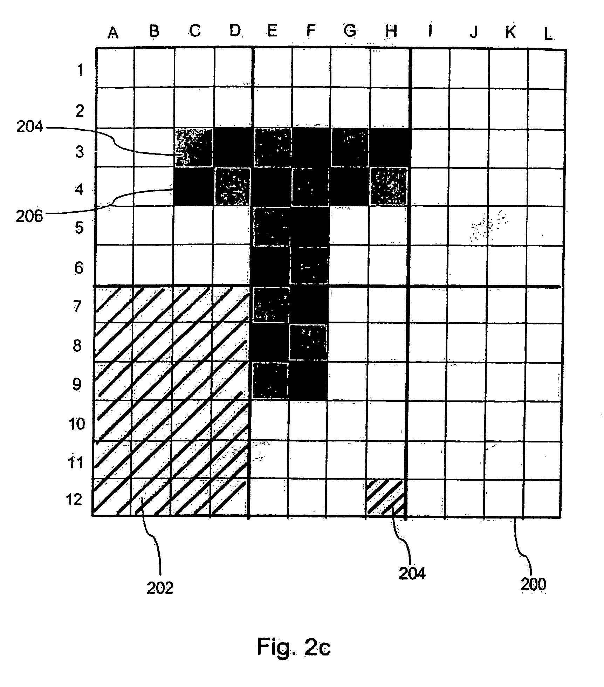

Figur 2c veranschaulicht die Aufteilung eines Bildes 200 in einzelne Teilbilder 202, wobei die einzelnen Bildpunkte 204 und 206 unterschiedliche Intensitätswerte aufweisen. In einem ersten Markierungsschritt werden hierzu sämtliche Bildelemente 204 und 206 markiert. In einem zweiten Markierungsschritt werden nur jene Bildelemente 206 markiert, die eine vollständige Verfärbung erhalten sollen. Je nach Anzahl der einzelnen Markierungsschritte und der Energie die Laserpulse können somit nahezu beliebig viele Farbwerte auf dem Datenträger erzeugt werden.

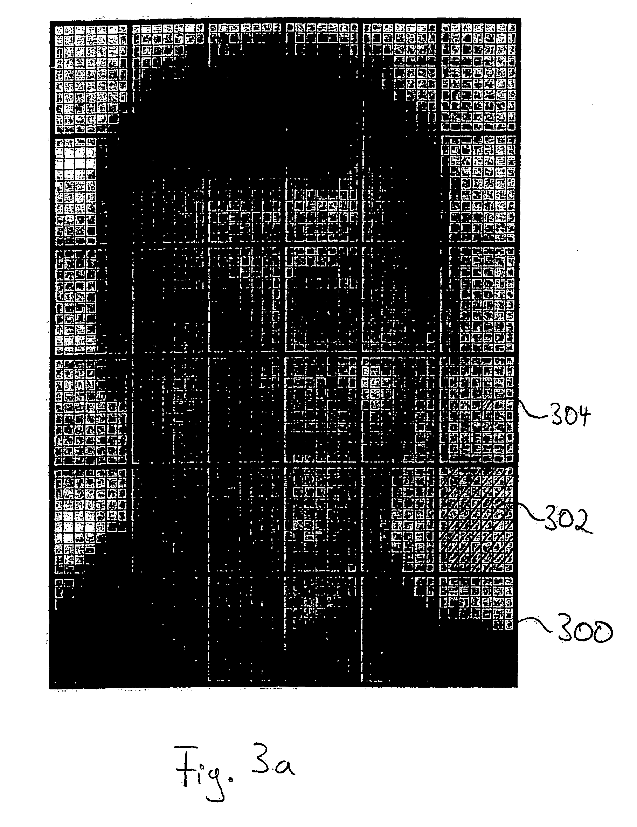

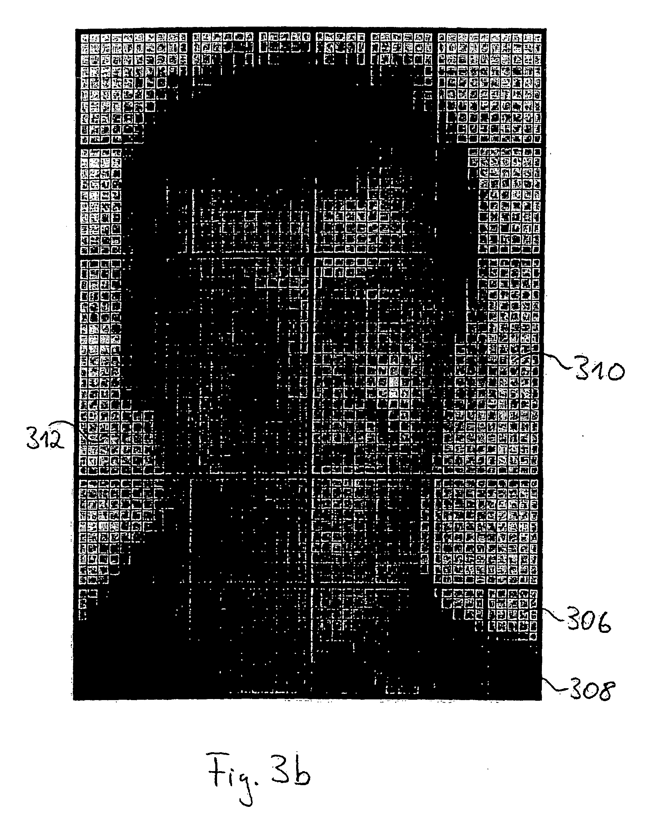

In Figur 3a ist ein hochauflösendes Portraitbild 300 mit verschiedenen Farbwerten (hier nur Grauwerte) dargestellt. Das Portraitbild wurde in 36 Teilbilder 302 segmentiert, die jeweils aus 7 x 10 Bildpunkten 304 bestehen. Das erfindungsgemäße Lasermarkierungsverfahren mit Hilfe der Aufteilung in einzelne gleichgroße Teilbilder ermöglicht in diesem Fall eine 70-fach schnellere Markierungszeit gegenüber dem sequentiellen Markierungsverfahren für jeden einzelnen Bildpunkt.

Die maximale Größe der Teilbilder ist allerdings beschränkt durch die zur Verfügung stehende Pulsenergie E2 des Lasers. Um eine erste Segmentierung vorzunehmen wird angenommen, dass für jeden Bildpunkt des Teilbildes der maximale Farbwert erreicht werden muss. In der Regel verlangen Portraitbilder jedoch keine vollständig gesättigten Teilbilder mit einer homogenen Pulsenergieverteilung. In Abhängigkeit von den Bilddaten (Farbwerte der einzelnen Bildpunkte) kann eine maximal benötigte Pulsenergie E1 bestimmt werden, die ausreicht um jedes Teilbild zu markieren.

Die Energiedifferenz zwischen E1 und E2 kann zum Zwecke einer weiteren Optimierung der Beschriftungszeit verringert werden, indem die Abmessung der Teilbilder vergrößert wird. Tritt hierbei der Fall ein, dass E1 größer als E2 ist, so reicht die Energie eines einzigen Laserpulses nicht aus, um jedes Teilbild entsprechend der Farbewertverteilung vollständig zu markieren. Durch Akkumulation von mehreren Laserpulsen kann die Sättigung des Farbwertes im Teilbild prinzipiell gesteigert werden. Es ist jedoch zu beachten, dass diese Effekte nicht linear sind und somit bei der ersten Markierung des Teilbildes zu berücksichtigen sind (s.u. Farbwertkurve).

Figur 3b zeigt eine Möglichkeit, die Anzahl der zu markierenden Teilbilder weiter zu verringern. Hierbei ist die Größe der Teilbilder nicht für alle Teilbilder konstant, sondern hängt von der integralen Farbwertintensität eines jeden Teilbildes ab. Je höher diese integrale Farbwertintensität ist, desto kleiner muss das Teilbild gewählt werden, damit die zur Verfügung stehende Laserpulsenergie zur Markierung ausreicht. Beispiele für solche Teilbilder sind 306, 308.
In den Bereichen geringer integraler Farbwertintensität können die Teilbilder entsprechend größer gewählt werden (siehe 310, 312).

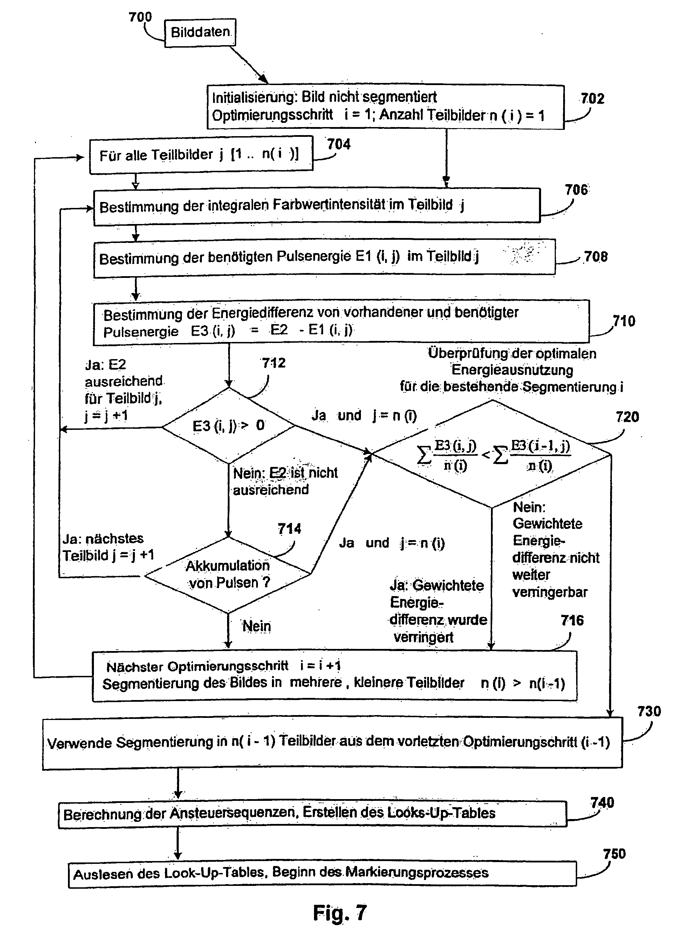

Die Anzahl der zu markierenden Teilbilder lässt sich dadurch im Vergleich zu Figur 3a von 36 auf 30 reduzieren. Dies bringt eine weitere Optimierung der Markierungszeit um den Faktor 1,2. Ein entsprechendes iteratives Verfahren zur Segmentierung ausgehend von großen zu kleineren Teilbildern ist in Figur 7 dargestellt und weiter unten beschrieben.

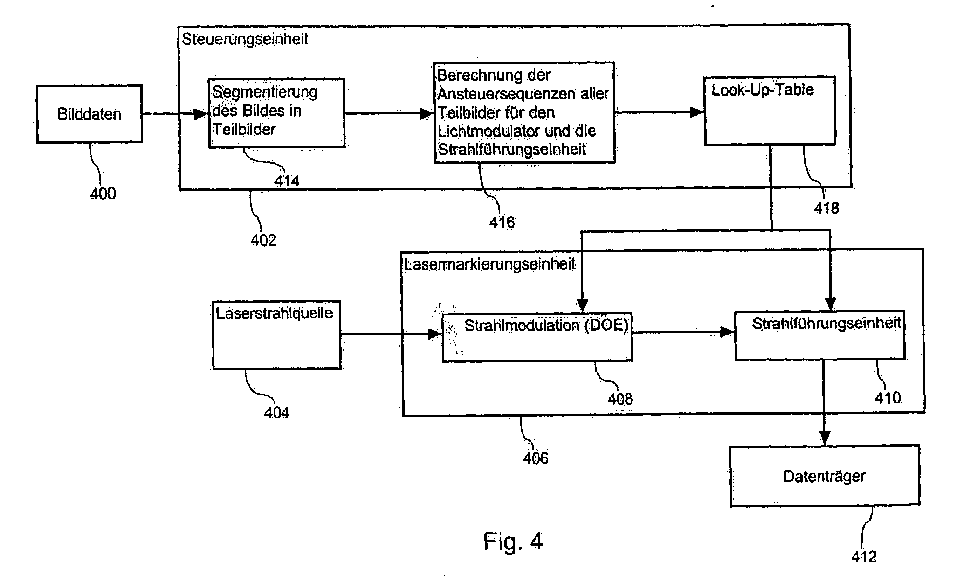

Die Figur 4 veranschaulicht ein erfindungsgemäßes Lasermarkierungsverfahren. Dieses beruht auf Bilddaten 400, einer Steuerungseinheit 402, einer Laserstrahlquelle 404, einer Lasermarkierungseinheit 406 sowie einem Datenträger 412.

Die Steuerungseinheit 402 besteht aus einem Programmmodul 414 zur Segmentierung des Bildes in Teilbilder, einem Programmmodul 416 zur Berechnung der Ansteuersequenzen aller Teilbilder für den Lichtmodulator und die Strahlführungseinheit und einem Look-Up-Table 418. Die Lasermarkierungseinheit 406 besteht aus einer Strahlmodulationseinheit 408 und einer Strahlführungseinheit 410.

Die Bilddaten 400 werden in das Programmmodul zur Bildsegmentierung 414 der Steuerungseinheit 402 eingespeist. Das Programmmodul 414 nimmt eine Segmentierung des Bildes in einzelne Teilbilder vor. Die Teilbilder werden danach in das Programmmodul zur Berechnung der Ansteuersequenzen 416 eingelesen. In diesem werden die Ansteuersequenzen für die Strahlenmodulationseinheit 408 und die Ansteuersequenzen für die Strahlführungseinheit 410 berechnet. Die berechneten Ansteuersequenzen werden dann in dem Look-Up-Table 418 abgespeichert.

Während des Markierungsvorganges werden die Ansteuersequenzen aus dem Look-Up-Table 418 ausgelesen und synchron an die Strahlenmodulationseinheit 408 und die Strahlführungseinheit 410 der Lasermarkierungseinheit 406 übergeben. Der Laserstrahl aus der Laserstrahlquelle 404 wird in der Lasermarkierungseinheit 406 mit Hilfe der Strahlmodulationseinheit 408 ortsaufgelöst moduliert.

In einer bevorzugten Ausführungsform der Erfindung besteht die Strahlenmodulationseinheit 408 aus einem diffraktiven optischen Element. Nachfolgend wird der ortsaufgelöst modulierte Laserstrahl mit Hilfe der Strahlführungseinheit 410 auf die erforderliche Position auf dem Datenträger 412 gerichtet. Die Geometrie der Teilbilder sowie die Pulsenergie der Laserstrahiquelle sind hierbei fest vorgegeben.

Die Fläche der Teilbilder wird maximal so groß gewählt, so dass mit einem einzigen Laserpuls sich der entsprechende Farbwert auf der gesamten Fläche eines Teilbildes einstellt. Durch die Auswahl möglichst großer Teilbilder ergibt sich hierbei eine Verkürzung der Markierungszeit gegenüber dem sequentiellen Markierungsverfahren.

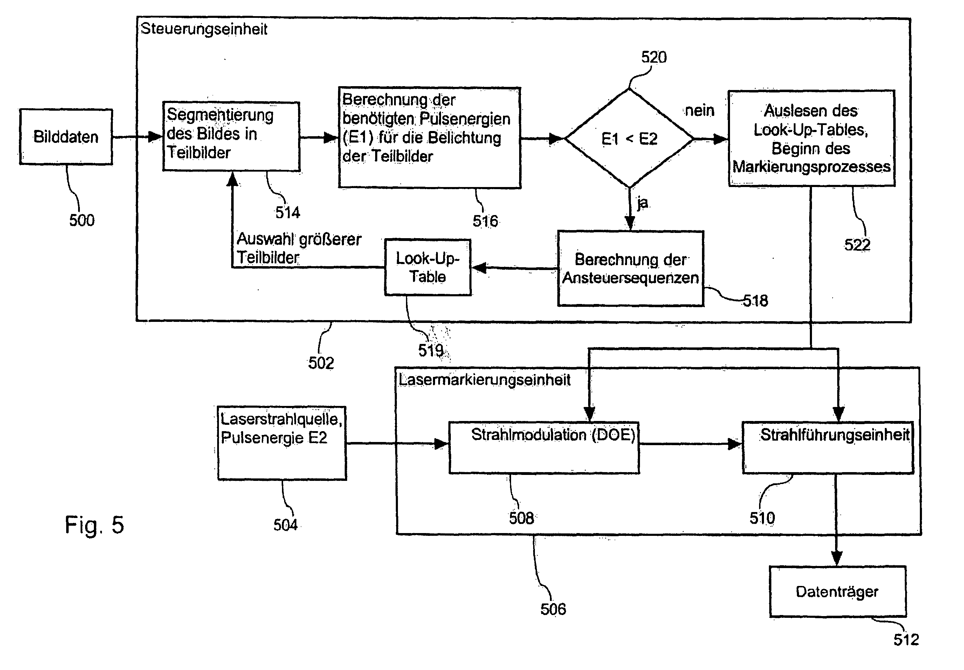

Figur 5 zeigt ein Blockdiagramm für ein Verfahren zur Lasermarkierung eines Datenträgers, welches selbsttätig eine Optimierung, insbesondere Verkürzung der Markierungszeit, vornimmt. Der Aufbau ist analog zur Figur 4. Lediglich die Steuerungseinheit 502 beinhaltet weitere Programmmodule zur Optimierung der Markierungszeit. In Figur 5 besteht die Steuerungseinheit 502 aus einem Programmmodul 514 zur Bildsegmentierung, einem Programmmodul 516 zur Berechnung der zur Markierung der Teilbilder benötigten Pulsenergie E1, einem Programmmodul 520 zum Energievergleich, einem Programmmodul 522 zur Ansteuerung der Lasermarkierungseinheit, einem Programmmodul 518 zur Berechnung der Ansteuersequenzen für die Strahlenmodulationseinheit 508 und die Strahlführungseinheit 510, sowie einem Look-Up-Table 519.

Die Bilddaten 500 werden in das Programmmodul 514 zur Segmentierung des Bildes in Teilbilder der Steuerungseinheit 502 eingelesen. Das Programmmodul 514 segmentiert das Bild in einzelne Teilbilder. Die Geometrie und die Bildinformation der einzelnen Teilbilder wird vom Programmmodul 514 an das Programmmodul 516 zur Berechnung der benötigten Pulsenergien für jedes Teilbild E1 weitergegeben. Im Programmmodul 520 wird die benötigte Pulsenergie für jedes Teilbild E1 mit der zur Verfügung stehenden Pulsenergie eines einzigen Laserpulses verglichen.

Ist E1 kleiner oder gleich E2, so werden die für das Teilbild erforderlichen Ansteuersequenzen im Programmmodul 518 berechnet. Die berechneten Ansteuersequenzen werden danach im Look-Up-Table 519 abgespeichert.

Anschließend erfolgt eine Auswahl in größere Teilbilder, so dass das Bild in eine geringere Anzahl einzelner Teilbilder segmentiert wird. Diese erneute Segmentierung erfolgt wiederum im Programmmodul 514.

Wiederum werden die Bildinformationen der Teilbilder sowie ihrer Geometrie an das Programmmodul 516 zur Berechnung der benötigten Pulsenergie E1 weitergegeben. Anschließend erfolgt ein weiterer Vergleich der Energien E1 und E2. Dieser Vorgang wird so oft wiederholt, bis E1 größer als E2 ist. In diesem Fall beginnt das Modul zur Ansteuerung der Lasermarkierungseinheit mit dem Auslesen der zuletzt im Look-Up-Table gespeicherten Ansteuersequenzen für die Lasermarkierungseinheit. Die Lasermarkierung erfolgt dann analog zum in Figur 4 dargestellten Verfahren.

Bei diesem Verfahren muss gewährleistet sein, dass die Fläche der Teilbilder bei der erstmaligen Segmentierung des Bildes komplett mit einem einzigen Laserpuls mit einem vollständig gesättigten Farbwert markiert werden kann. Der Look-Up-Table 519 übernimmt hierbei die Funktion eines Datenpuffers. Da der Optimierungsprozess eine gewisse Rechenzeit in Anspruch nimmt, wird somit der Markierungsprozess, der mit einer vorbestimmten Frequenz durchgeführt wird, nicht beeinträchtigt.

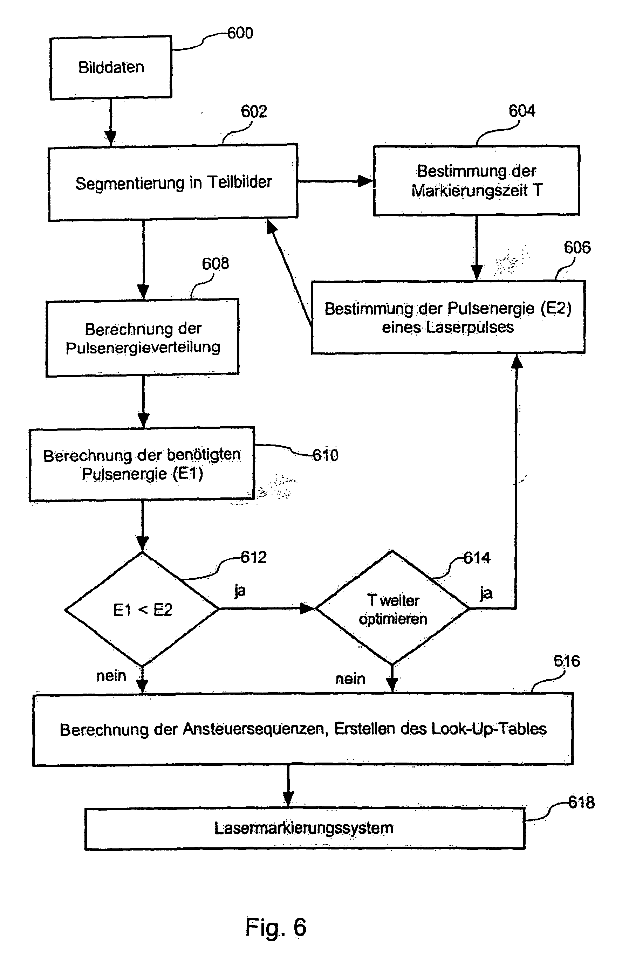

Figur 6 beschreibt ein Lasermarkierungssystem, bei dem wahlweise die Geometrie der Teilbilder, die Markierungszeit oder die Pulsenergie eines Laserpulses optimiert oder aber variabel eingestellt werden kann. Das Verfahren benötigt Bilddaten 600, ein Programmmodul zur Segmentierung der Bilddaten 602, ein Programmmodul zur Berechnung der Markierungszeit 604, ein Programmmodul zur Berechnung der Energie (E2) der Laserpulse 606, ein Programmmodul zur Berechnung der Pulsenergieverteilung des Lasers 608, ein Programmmodul zur Berechnung der benötigten Pulsenergie (E1) 610, ein Programmmodul zum Energievergleich 612, ein Programmmodul zur Optimierung der Markierungszeit 614, ein Programmmodul zur Berechnung der Ansteuersequenzen für das Lasermarkierungssystem und die Erstellung des Look-Up-Tables 616 sowie ein Lasermarkierungssystem 618.

Die Bilddaten 600 werden in das Programmmodul zur Segmentierung der Bilddaten 602 eingelesen. In Abhängigkeit von der Geometrie der so ausgewählten Teilbilder und der sich daraus ergebenden Anzahl der Teilbilder wird mit Hilfe des Programmmoduls 604 die Markierungszeit zur vollständigen Markierung des Bildes auf dem Datenträger bestimmt.

In Abhängigkeit von der Fläche der Teilbilder bestimmt das Programmmodul 606 die benötigte Energie (E2) eines Laserpulses, der die gesamte Fläche des Teilbildes auf dem Datenträger komplett schwärzen kann. Wahlweise kann im Modul 606 eine bestimmte Energie (E2) fest vorgegeben werden. In Abhängigkeit dieser fest vorgegebenen Energie (E2) kann das Programmmodul 602 die maximal zulässige Fläche eines Teilbildes bestimmen.

Ebenso kann im Programmmodul 604 eine bestimmte Markierungszeit vorgegeben werden. In diesem Fall können die Programmmodule 606 und 602 die erforderliche Energie (E2) der Laserpulse sowie die erforderliche Geometrie der Teilbilder berechnen. Das Programmmodul 608 berechnet schließlich die erforderliche Pulsenergieverteilung für jedes Teilbild. Die so berechnete Pulsenergieverteilung wird an das Programmmodul 610 zur Berechnung der benötigten Pulsenergie (E1) weitergegeben.

Das Programmmodul 612 vergleicht schließlich die benötigte Pulsenergie (E1) mit der Pulsenergie des Lasers (E2). Ist E1 größer als E2 und ist eine Mehrfachmarkierung der Teilbilder vorgesehen, so wird die im Pogrammmodul 608 berechnete Pulsenergieverteilung eines jeden Teilbildes in das Programmmodul 616 eingespeist. Im Programmmodul 616 werden die Ansteuersequenzen für die Lasermarkierungseinheit für jedes Teilbild berechnet und der dazugehörige Look-Up-Table erstellt. Während des sich nun anschließenden Lasermarkierungsprozesses wird der Look-Up-Table zur Ansteuerung der Lasermarkierungseinheit nach einem der bereits skizzierten Verfahren ausgelesen.

Für den Fall, dass der Vergleich der beiden Energien E1 und E2 mittels des Programmmoduls 612 ergibt, dass die benötigte Energie E1 kleiner oder gleich der zur Verfügung stehenden Energie des Laserpulses ist, so kann mit einem weiteren Programmmodul 614 eine weitere Optimierung der Markierungszeit vorgenommen werden. Ist eine weitere Optimierung der Markierungszeit im Programmmodul 614 nicht erwünscht, so kann das Teilbild mit einem einzigen Laserpuls markiert werden.

Hierzu wird die im Programmmodul 608 berechnete Pulsenergieverteilung an das Programmmodul 616 zur Berechnung der Ansteuersequenzen der Teilbilder weitergegeben. Das sich daran anschließende Lasermarkierungsverfahren verläuft in der vorbeschriebenen Art und Weise. Ist jedoch mittels des Programmmoduls 614 eine weitere Optimierung der Beschriftungszeit erwünscht, so kann mit Hilfe des Programmmoduls 606 beispielsweise eine größere Energie der Laserpulse E2 und/oder mit Hilfe des Programmmoduls 602 eine geeignetere Wahl der Teilbilder erfolgen.

Figur 7 zeigt ein adaptives Verfahren zur Segmentierung von Bilddaten. Beginnend mit der größtmöglichen Geometrie für ein Teilbild wird im Schritt 702 dem Bild 700 ein einziges Teilbild (n(i) = 1) zugeordnet. Hierbei bezeichnet i die Anzahl der Optimierungsschritte und n(i) die Anzahl der Teilbilder. Im Schritt 702 bzw. Schritt 704 wird jeweils ein einziges Bild (j) aus der Menge der Teilbilder (j[1...n(i)]) an Schritt 706 übergeben. Im Schritt 706 wird die integrale Farbwertintensität über alle Bildpunkte des entsprechenden Teilbildes j bestimmt. Anhand dieser lässt sich die benötigte Pulsenergie E1 zur Markierung des Teilbildes j in Schritt 708 bestimmen.

Die Energiedifferenz E3 zwischen vorhandener Laserpulsenergie E2 und benötigter Pulsenergie E1 wird in Schritt 710 bestimmt. Anhand dieser Energiedifferenz E3 werden in den nachfolgenden Schritten 712, 714 und 720 weitere Entscheidungen für die Optimierung getroffen.

Im Schritt 712 wird geprüft ob die Energiedifferenz E3 positiv ist, d.h. ob die zur Verfügung stehende Pulsenergie des Lasers E2 ausreicht, um das Teilbild j mit vollständig gesättigtem Farbwert zu markieren. Ist E3 positiv so wird das nächste Teilbild (j = j+1) ausgewählt und das Verfahren geht zum Schritt 706 über. Ist E3 positiv und ist das Teilbild (j = n(i)) das letzte Teilbild aus der Menge der Teilbilder (j[1....n(i)]), so fährt das Verfahren mit Schritt 720 fort. Ist E3 jedoch negativ, so kann im Schritt 714 entschieden werden, ob mehrere Laserpulse für die Markierung dieses Teilbildes akkumuliert werden sollen.

Für die Entscheidung, mehrere Laserpulse für die Markierung zu akkumulieren, ist eine geringe Dynamik im Teilbild ausschlaggebend. In diesem Fall ist bei der nachfolgenden Erstellung der Look-Up-Tables, die Akkumulation in einer Farbwertkurve zu berücksichtigen. Die Farbwertkurve gibt eine eindeutige Zuordnung zwischen Farbwert und akkumuliertem Energiewert auf dem Material.

Soll nach Schritt 714 keine akkumulierte Markierung erfolgen, so wird in Schritt 716 die nächstmögliche Zerlegung in mehrere, kleinere Teilbilder vorgenommen, wonach das Verfahren zu Schritt 704 übergeht. Soll im Schritt 714 eine akkumulierte Markierung erfolgen, so wird das nächste Teilbild (j = j+1) ausgewählt und das Verfahren geht zum Schritt 706 über.
Soll jedoch nach Schritt 704 eine akkumulierte Markierung erfolgen und ist das Teilbild (j = n(i)) das letzte Teilbild aus der Menge der Teilbilder (j[1....n(i)]), so fährt das Verfahren mit Schritt 720 fort.

Im Schritt 720 wird überprüft ob die Pulsenergie E2 für die bestehende Segmentierung optimal ausgenutzt wird. Hierzu wird die Summe der über die Anzahl der Teilbilder gewichteten Energiedifferenzen E3 mit der entsprechenden Summe des vorherigen Optimierungsschrittes (i-1) verglichen.

Ist diese Summe kleiner geworden, so wird die Energie besser ausgenutzt und man stößt im Schritt 716 den nächsten Optimierungsschritt (i+1) an. Lässt sich diese Summe nicht weiter verringern, so hat man im vorangegangenen Optimierungsschritt (i-1) bereits eine optimale Segmentierung gefunden, welche dann im Schritt 730 ausgewählt wird. Wie schon in Figur 6 beschrieben, werden dann im Schritt 740 die Ansteuersequenzen für den Lichtmodulator berechnet und der Look-Up-Table erstellt. In dem sich anschließenden Schritt 750 wird der Look-Up-Table ausgelesen und der Markierungsprozess in Gang gesetzt, welcher nun mit einer optimierten Markierungszeit abläuft.

### Bezugszeichenliste

- Lasermarkierungssystem: 100
- Steuerungseinheit: 102
- Laserstrahlquelle: 104
- Markierungseinheit: 106
- Modul zur Intensitätsmodulation: 108
- Modul zur Strahlformung: 110
- Modul zur Strahlführung: 112
- Datenträger: 114
- Personalisierungs Management Plattform: 116
- Operator: 118
- Personalisierungsauftrag: 120
- Bild: 200
- Teilbild: 202
- Bildpunkt: 204
- Bildpunkt: 206
- Bild: 300
- Teilbild: 302
- Bildpunkt: 304
- Teilbild: 306
- Teilbild: 308
- Teilbild: 310
- Teilbild: 312
- Bilddaten: 400
- Steuerungseinheit: 402
- Laserstrahlquelle: 404
- Lasermarkierungseinheit: 406
- Strahlmodulationseinheit: 408
- Strahlführungseinheit: 410
- Datenträger: 412
- Programmmodul zur Bildsegmentierung: 414
- Programmmodul zur Berechnung der Ansteuersequenzen: 416
- Look-Up-Table: 418
- Bilddaten: 500
- Steuerungseinheit: 502
- Laserstrahlquelle: 504
- Lasermarkierungseinheit: 506
- Strahlmodulationseinheit: 508
- Strahlführungseinheit: 510
- Datenträger: 512
- Programmmodul zur Bildsegmentierung: 514
- Programmmodul zur Berechnung der Pulsenergie E1: 516
- Programmmodul zur Berechnung der Ansteuersequenzen: 518
- Look-Up-Table: 519
- Programmmodul zum Energievergleich: 520
- Programmmodul zur Ansteuerung der Lasermarkierungseinheit: 522
- Bilddaten: 600
- Programmmodul zur Bildsegmentierung: 602
- Programmmodul zur Berechnung der Markierungszeit: 604
- Programmmodul zur Berechnung der Laserpulsenergie E2: 606
- Programmmodul zur Erzeugung der Pulsenergieverteilung: 608
- Programmmodul zur Berechnung der benötigten Pulsenergie: 610
- Programmmodul zum Energievergleich: 612
- Programmmodul zur Optimierung der Markierungszeit: 614
- Programmmodul zur Berechnung der Ansteuersequenzen: 616
- Lasermarkierungssystem: 618

## Patentansprüche

1. Verfahren zur Lasermarkierung eines Datenträgers (114; 412; 512) mit einem Bild (200; 300) unter Verwendung gepulster Laserstrahlung mit folgenden Schritten:
- Segmentierung des Bildes in mehrere, zweidimensionale Teilbilder (202; 302, 304; 306,...,312); wobei die Größe der Teilbilder in Abhängigkeit der zur Verfügung stehenden Energie eines Laserpulses und der zur Markierung der Teilbilder benötigten Pulsenergie gewählt wird,
- sequentielle Markierung des Datenträgers mit den Teilbildern derart, dass in der Gesamtheit aller Teilbilder das Bild entsteht, wobei zur Markierung jedes Teilbildes der Datenträger mit einer vorgegebenen zweidimensionalen Pulsenergieverteilung des Laserstrahls beaufschlagt wird, die mittels eines ansteuerbaren Lichtmodulators erzeugt wird.

2. Verfahren nach Anspruch 1, wobei die zur Erzeugung der einzelnen Teilbilder (202; 302, 304; 306,...,312) notwendigen Ansteuersequenzen für den Lichtmodulator in einem elektronischen Speichermedium in Form eines Look-Up-Tables (418; 519) vor dem Beginn des Markierungsprozesses gespeichert werden.

3. Verfahren nach einem der Ansprüche 1 oder 2, wobei eine Steuereinheit während des Markierungsprozesses die Ansteuersequenzen für jedes Teilbild aus einem Look-Up-Table (418; 519) ausliest und den Lichtmodulator sowie eine Strahlführungseinheit mit den jeweiligen Steuersequenzen synchron ansteuert, so dass das jeweilige Teilbild (202; 302, 304; 306,...,312) an der erforderlichen Position innerhalb der Bildfläche auf dem Datenträger (114; 412; 512) aufgebracht wird.

4. Verfahren nach einem der Ansprüche 1 bis 3, wobei aus der gegebenen Pulsenergie des Laserpulses die homogen zu beleuchtende Fläche eines Teilbildes (202; 302, 304; 306,...,312) maximal so groß gewählt wird, so dass die mit einem einzigen Laserpuls deponierte Energie auf dem Datenträger (114; 412; 512) ausreicht, um auf dem Datenträger die gesamte Fläche vollständig mit einem gesättigten Farbwert zu markieren.

5. Verfahren nach einem der Ansprüche 1 bis 4, wobei ausgehend von der Pulsenergieverteilung des Bildes die Größe der Teilbilder (202; 302, 304; 306,...,312) maximiert und gleichzeitig die Schreibzeit eines Bildes mit folgenden Schritten minimiert wird:
a) Bestimmung der zum Markieren eines Teilbildes benötigten Energie, ausgehend von der vorbestimmten Pulsenergieverteilung des Bildes,
b) ist die zum Markieren benötigte Energie aller Teilbilder (202; 302, 304; 306,...,312) kleiner als die maximale Pulsenergie des Lasers, so werden die Teilbilder im Look-Up-Table (418; 519) gespeichert und es erfolgt die nächst gröbere Segmentierung des Bildes (200; 300) in neue, größere Teilbilder,
c) Berechnung der resultierenden neuen Pulsenergieverteilungen eines jeden neuen Teilbildes sowie Berechnung der entsprechenden benötigten Energie zur Markierung eines jeden Teilbildes,
d) Wiederholung der Schritte (b) und (c) zur sukzessiven Vergrößerung der Fläche eines Teilbildes solange bis die benötigte Energie größer als die Pulsenergie des Lasers ist,
e) wenn die benötigte Energie eines Teilbildes größer als die Pulsenergie des Lasers ist, so wird mit dem Markierungsvorgang mit dem zuletzt gespeicherten Look-Up-Table begonnen.

6. Verfahren nach einem der Ansprüche 1 bis 5, wobei unter vorgegebener maximaler Pulsenergie des Lasers die benötigte Zeit zum Markieren des Datenträgers (114; 412; 512) mittels einer optimierten Segmentierung in Teilbilder (202; 302, 304; 306,...,312) mit folgenden Schritten minimiert wird:
a) Auswahl einer ersten, kleinstmöglichen Menge von Teilbildern,
b) Bestimmung der integralen Farbwertintensität eines jeden Teilbildes j,
c) Berechnung der zur Markierung der Teilbilder benötigten Energie E1 in Abhängigkeit der integralen Farbwertintensität,
d) Berechung einer Energiedifferenz E3 zwischen der vom Laser zur Verfügung gestellten Energie E2 und der zur Markierung benötigten Energie E1,
e) ist die in Schritt (d) berechnete Energie E3 positiv, so wird mit Schritt (b) für das nächste Teilbild (j+1) fortgefahren, sofern das Teilbild j nicht das letzte Teilbild aus der Menge von Teilbildern ist, in diesem Fall ist mit dem Schritt (i) fortzufahren,
f) ist die in Schritt (d) berechnete Energie E3 negativ, so muss eine Entscheidung darüber gefällt werden, ob zur Markierung mehrere Laserpulse akkumuliert werden,
g) sollen nach Schritt (f) zur Markierung des Teilbildes nicht mehrere Laserpulse erfolgen, so folgt eine Segmentierung des Bildes (200; 300) in die nächstmögliche größere Anzahl von Teilbildern, anschließend ist mit Schritt (b) fortzufahren,
h) sollen nach Schritt (f) zur Markierung des Teilbildes mehrere Laserpulse erfolgen, so wird mit Schritt (b) für das nächste Teilbild (j+1) fortgefahren, sofern das Teilbild j nicht das letzte Teilbild aus der Menge von Teilbildern ist, in diesem Fall ist mit dem Schritt (i) fortzufahren,
i) ist die Summe der über die Anzahl einer Menge von Teilbildern gewichteten Energiedifferenzen E3 kleiner als die entsprechende Summe des vorherigen Optimierungsschrittes (i-1), so folgt eine Segmentierung des Bildes in die nächstmögliche größere Anzahl von Teilbildern, anschließend ist mit Schritt (b) fortzufahren,
j) ist die in Schritt (i) berechnete Summe der über die Anzahl einer Menge von Teilbilder gewichteten Energiedifferenzen E3 größer als die entsprechende Summe des vorherigen Optimierungsschrittes (i-1), so ist die vorherige Segmentierung in Teilbilder (i-1) auszuwählen..

7. Lasermarkierungssystem für einen Datenträger (114; 412; 512) mit einem Bild (200; 300) unter Verwendung gepulster Laserstrahlung mit:
- Mitteln zur Segmentierung eines Bildes in mehrere, zweidimensionale Teilbilder (202; 302, 304; 306,...,312), wobei die Größe der Teilbilder in Abhängigkeit der zur Verfügung stehenden Energie eines Laserpulses und der zur Markierung der Teilbilder benötigten Pulsenergie wählbar ist,
- Mitteln zur ansteuerbaren Modulation der Amplitude und/oder Phase des Laserstrahls zur Erzeugung einer für die Teilbilder vorgegebenen Pulsenergieverteilung,
- Mitteln zur sequentiellen Markierung des Datenträgers mit den Teilbildern derart, dass in der Gesamtheit aller Teilbilder das Bild entsteht, wobei jedes Teilbild eine Anzahl von Bildpunkten beinhaltet, die simultan markiert werden.

8. Lasermarkierungssystem nach Anspruch 7, wobei die Mitteln zur ansteuerbaren Modulation einen Lichtmodulator aufweisen, der aus einem diffraktiven optischen Element besteht, das eine kartesische, zweidimensionale Anordnung einzelner ansteuerbarer Zellen enthält, bei denen es sich um antiferroelektrische nematische, smektische, oder cholesterische oder um ferroelektrische Flüssigkristallzellen handelt, die eine zweidimensionale ortsaufgelöste Pulsenergieverteilung des Laserstrahls ermöglichen.

9. Lasermarkierungssystem nach Anspruch 8, wobei das diffraktive optische Element ein ortsaufgelöstes phasen- und/oder amplitudenmodulierendes computergeneriertes Hologramm enthält, an weichem der beaufschlagte Laserstrahl derart gebeugt wird, so dass durch Interferenz eine dem Teilbild entsprechende Pulsenergieverteilung auf dem Datenträger (114; 412; 512) entsteht, die das Teilbild (202; 302, 304; 306,...,312) markiert.

10. Lasermarkierungssystem nach einem der Ansprüche 8 bis 9, mit einer Steuereinheit zur Ansteuerung des Lichtmodulators, die eine diskrete, über der Fläche eines Bildpunktes homogene Pulsenergieverteilung erzeugt, die an den Rändem eines jeden Bildpunktes abrupt abfällt, so dass für jeden Bildpunkt ein rechteckiges, mit den Abmessungen des Bildpunktes übereinstimmendes, Leistungsprofil erzeugt werden kann, und mit einer Strahlführungseinheit, die aus einem weiteren, schaltbaren, diffraktiven optischen Element besteht, welches ein phasenmodulierendes Hologramm aufweist, und den Laserstrahl in zwei Raumrichtungen ablenkt, so dass die vorgegebene Pulsenergieverteilung eines jeden Teilbildes in der ersten Beugungsordnung des Hologramms des diffrakiven optischen Elements erzeugbar ist.

11. Computerprogrammprodukt zur Ausführung eines Verfahrens nach einem der Patentansprüche 1 bis 6.

## Claims

1. Procedure for the laser marking of a data carrier (114, 412, 512) with an image (200; 300) using pulsed laser radiation by the following steps:
- segmentation of the image in a plurality of twodimensional partial images (202; 302; 304; 306;...312) wherein the size of the partial images is chosen depending on the available energy of a laser pulse and the pulse energy needed for the marking of the partial images,
- sequential marking of the data carrier with the partial images in such way that the image is created from the totality of all partial images, whereas for marking of each partial image the data carrier is acted upon by a given two dimensional distribution of the laser beam, generated by a controllable light modulator.

2. Procedure according to claim 1, wherein the activation sequences for the light modulator necessary for the generation of the respective partial images (202; 302; 304; 306; ...; 312) are saved as a look-up-table (418, 519) before the beginning of the marking process.

3. Procedure according to one of the claims 1 or 2, wherein a guiding unit is reading the activation sequences for each partial image from a look-up-table (418; 519) during the marking process and activates synchronously the light modulator as well as a beam guiding unit with the respective activation sequences, so that the respective partial image (202; 302; 304; 306; ...; 312) is superimposed in the required position within the image surface on the data carrier (114, 412, 512).

4. Procedure according to one of the claims 1 to 3, wherein the surface of a partial image (202; 302; 304; 306; ...; 312) which has to be highlighted homogeneously from the given pulse energy of the laser pulse is chosen maximum so big, that the energy deposed on the data carrier (114, 412, 512) with a single laser pulse is sufficient to fully mark the whole image on the data carrier with a saturated colour value.

5. Procedure according to one of the claims from 1 to 4, wherein starting from the pulse energy distribution of the image the size of the partial images (202; 302; 304; 306; ...; 312) is maximized and simultaneously the writing time of a picture is minimized by the following steps:
a) determination of the energy necessary for the marking of a partial image starting from the predetermined pulse energy distribution of an image;
b) if the energy necessary for the marking of all partial images (202; 302; 304; 306; ...; 312) is smaller than the maximum pulse energy of the laser, the partial images are saved in the Look-Up-Table (418, 519) and the next rougher segmentation of the image (200, 300) in new, bigger partial images follows up;
c) calculation of the resulting new pulse energy distributions of each new partial image as well as the calculation of the respective necessary energy for the marking of each partial image;
d) repeating the steps (b) and (c) for the successive enhancement of the surface of a partial image as long as the necessary energy is bigger than the pulse energy of the laser;
e) if the necessary energy of a partial image is higher than the pulse energy of the laser, the marking procedure will begin with the last saved Look-Up-Table.

6. Procedure according to one of the claims 1 to 5, wherein under predetermined maximum pulse energy of the laser the time needed for marking the data carrier (114, 412, 512) by means of an optimized segmentation in partial images (202; 302; 304; 306; ...; 312) is minimized by the following steps:
a) selection of a first, smallest possible quantity of partial images;
b) determination of the complete intensity of the colour value of each partial image j;
c) calculation of the energy E1 necessary for marking the partial images depending on the integral intensity of the colour value;
d) calculation of an energy difference E3 between the energy E2 provided by the laser and the energy E1 needed for the marking;
e) if the energy E3 calculated in step (d) is positive, than it will be continued with the next step (b) with the following partial image (j+1) as far as the partial image j is not the last partial image from the amount of partial images, in this case it has to be continued with step (i);
f) if the energy E3 calculated in step (d) is negative, it must be decided if for the marking more laser pulses should be accumulated;
g) if after step (f) for the marking of the partial image don't result more laser pulses, than a segmentation of the picture (200, 300) in the next possible bigger number of partial images follows, after that it has to be continued with step (b);
h) if after step (f) for the marking of the partial image more laser pulses result, than it will be continued with step (b) for the next partial image (j+1) so far the partial image j is not the last partial image from the amount of partial images, in this case it has to be continued with step (i);
i) if the sum of energy differences E3 weighted over the amount of partial images is smaller than the corresponding sum of the previous optimizing step (i-1), a segmentation of the image to the next possible number of partial images follows, subsequently it will be continued with step (b);
j) if the sum of the energy differences E3, calculated in step (i) weighted over the number of the amount of partial images is bigger than the corresponding sum of the previous optimization step (i-1) than the previous segmentation in partial images (i-1) has to be chosen.

7. Laser marking system for a data carrier (114, 412, 512) with a picture (200, 300) by applying pulsed laser radiation with:
- means of segmentation of an image in more, two-dimensional partial images (202; 302; 304; 306; ...; 312) whereas the size of the partial images can be chosen depending on the available energy of a laser pulse and the pulse energy necessary for the marking of the partial images,
- means for activating the modulation of the amplitude and/or phase of the laser beam for the generation of a pulse energy distribution specified for the partial images,
- means for sequential marking of the data carrier with the partial images in such a way that the image emerges from the totality of all partial images, whereas each partial image contains a number of pixels which are marked simultaneously.

8. Laser marking system according to claim 7, wherein the means for activating the sequential modulation have a light modulator consisting in a diffractive optic element which has a Cartesian, two-dimensional alignment of individual cells that can be activated, which can be anti-ferroelectrical, nematic, smectic or cholesteric or ferroelectrical liquid crystal cells, which make possible a two dimensional locally dissolved distribution of pulse energy of the laser beam.

9. Laser marking system according to claim 8, wherein the diffractive optic element contains a locally dissolved phase and/or amplitude modulating computer generated hologram upon which the acting laser beam is bent in a way that by interference a pulse energy distribution corresponding to the partial image develops on the data carrier (114, 412, 512) which marks the partial image (202; 302; 304; 306; ...; 312).

10. Laser marking system according to claims 8 or 9, with a control unit for controlling the light modulator, which generates a discrete homogeneous pulse energy distribution over the surface of a pixel, which slopes abruptly at the margin of each pixel, so that for each pixel a rectangular capacity profile corresponding to the dimensions of the pixel can be generated and with the beam guiding unit consisting of another connectable diffractive optic element that shows a phase modulating hologram and deviates the laser beam in two directions in space, so that the predetermined pulse energy distribution of each partial image can be generated in the first deflection order of the hologram of the diffractive optical element.

11. Computer program for the fulfilment of a procedure according to one of the claims 1 to 6.

## Revendications

1. Procédé de marquage par laser, d'un support de données (114; 412; 512) avec une image (200; 300), au moyen d'un rayonnement pulsatif du laser, avec les étapes suivantes :
- segmentation de l'image dans plusieurs images partielles bidimensionnelles (202; 302, 304; 306,...,312); où on choisit la dimension des images partielles en fonction de l'énergie disponible d'une impulsion de laser, et qui est éligible pour le marquage de l'énergie d'impulsion des images partielles,
- marquage séquentiel du support de données avec les images partielles, de telle manière que, dans la totalité de toutes les images partielles, l'image se forme, où pour être marqué, chaque image partielle du support de données sera soumise à une distribution alléguée d'énergie d'impulsion bidimensionnelle du rayon du laser, qui est produit au moyen d'un modulateur de lumière dirigeables.

2. Procédé selon la revendication 1, où les séquences de contrôle nécessaires pour produire les différentes images partielles (202; 302, 304; 306,..., 312) pour le modulateur de lumière, seront stockés dans un support de données électronique sous la forme de Look-Up-Tables (418; 519), avant le début du procédé de marquage.

3. Procédé selon une des revendications 1 ou 2, où un module de commande lit pendant le procédé de marquage les séquences de contrôle pour chaque image partielle d'un Look-Up-Table (418; 519) et commende, d'une manière synchrone, le modulateur de lumière ainsi qu'une unité de conduite de rayon avec les séquences de commende respectives, de sorte que l'image partielle respective (202; 302, 304; 306,..., 312) va être réunit à la position nécessaire dans la surface de l'image sur le support de données (114; 412; 512).

4. Procédé selon une des revendications 1 à 3, où d'énergie d'impulsion donnée de l'impulsion de laser, la surface d'une image partielle (202; 302, 304; 306,..., 312)à éclairer de façon homogène, va être choisi au maximum grande, de sorte que, l'énergie déposée sur le support de données (114; 412; 512) avec un seule impulsion de laser soit suffisante, pour marquer complètement la surface totale sur le support de données, avec une valeur de couleurs saturée.

5. Procédé selon une des revendications 1 à 4, où sur la base de la distribution d'énergie d'impulsion de l'image, la dimension des images partielles (202; 302, 304; 306,..., 312) est maximisé, et en même temps, le temps d'écriture d'une image avec les étapes suivantes est réduit à un minimum :
a) détermination de l'énergie nécessaire pour le marquage d'une image partielle, a partir de la distribution prédéterminée d'énergie d'impulsion de l'image,
b) si l'énergie nécessaire pour marquer toutes les images partielles (202; 302, 304; 306,...,312) est plus petit que l'énergie d'impulsion maximale du laser, ainsi, les images partielles seront stockés dans le Look-Up-Table (418; 519) et la segmentation suivante grossière de l'image (200; 300) dans des nouveaux et plus grandes images partielles, a lieu,
c) calcul des nouvelles distributions d'énergie d'impulsion résultant de chaque nouvelle image partielle, ainsi que le calcul de l'énergie nécessaire correspondante visant le marquage de chaque image partielle,
d) la répétition des étapes (b) et (c) visant l'agrandissement successif de la surface d'une image partielle, tandis que l'énergie nécessaire est plus grande que l'énergie d'impulsion du laser,
e) si l'énergie nécessaire d'une image partielle est plus grande que l'énergie d'impulsion du laser, ainsi, on va commencer le procédé de marquage avec le dernier Look-Up-Table stocké.

6. Procédé selon une des revendications 1 à 5, où par l'énergie d'impulsion du laser, maximum alléguée, le temps nécessaire pour le marquage du support de données (114; 412; 512) est réduit à un minimum, au moyen d'une segmentation optimisée dans des images partielles (202; 302, 304; 306,..., 312) avec les étapes suivantes :
a) choix d'une première quantité plus petite possible des images partielles,
b) détermination de la valeur de l'intensité des couleurs intégrale de chaque image partielle j,
c) calcul de l'énergie E1 nécessaire pour le marquage des images partielles, en fonction de l'intensité de valeur de la couleur intégrale,
d) calcul d'une différence d'énergie E3 entre l'énergie E2, mise à la disposition par le laser, et l'énergie E1, nécessaire pour le marquage,
e) si l'énergie E3 calculée dans une étape (d) est positive, ainsi on continue avec l'étape (b) pour la prochaine image partielle (j+1), pour autant que l'image partielle j ne soit pas la dernière image partielle de la quantité des images partielles, dans ce cas il faut continuer avec l'étape (i),
f) si l'énergie E3 calculée dans une étape (d) est négative, ainsi il faut prendre une décision si pour le marquage doivent être accumulés plusieurs impulsions du laser,
g) si après l'étape (f) pour le marquage de l'image partielle ne sont pas plusieurs impulsions de laser qui doit avoir lieu, ainsi, suit une segmentation de l'image (200; 300) dans un prochain nombre plus grand possible des images partielles, suivi ensuite par une étape (b),
h) si après l'étape (f) pour le marquage de l'image partielle, plusieurs impulsions de laser doivent avoir lieu, ainsi, on continue avec l'étape (b) pour la prochaine image partielle (j+1), pour autant que l'image partielle j ne soit pas la dernière image partielle de la quantité des images partielles, dans ce cas il faut continuer avec l'étape (i),
i) si la somme des différences d'énergie E3 par le nombre de la quantité pondéré des images partielles est plus petite que la somme correspondante de l'étape d'optimisation précédente (i-1), ainsi, suit une segmentation de l'image dans un prochain nombre plus grand possible des images partielles, ensuite, il faut continuer avec une étape (b),
j) si la somme des différences d'énergie E3, calculé dans une étape (i) par le nombre de la quantité pondéré des images partielles, est plus grande que la somme correspondante de l'étape d'optimisation précédente (i-1), ainsi, la segmentation précédente dans les images partielles (i-1) doit être choisie.

7. Système de marquage de laser pour un support de données (114; 412; 512) avec une image (200; 300), à l'emploi d'un rayonnement pulsatif de laser avec:
- moyens visant la segmentation d'une image dans plusieurs images partielle bidimensionnelle (202; 302, 304; 306,..., 312), où la dimension des images partielles est dépendent de l'énergie disponible d'une impulsion de laser, et qui est éligible pour le marquage de l'énergie d'impulsion des images partielles,
- moyens pour la modulation dirigé de l'amplitude et/ou de la phase du rayon laser visant la production d'une distribution d'énergie d'impulsion alléguée pour les images partielles,
- moyens visant le marquage séquentiel du support de données avec les images partielles, de telle manière que, dans la totalité des toutes les images partielles, l'image se forme, où chaque image partielle comprend un certain nombre des points d'image, qui seront marqués simultanément.

8. Système de marquage de laser selon la revendication 7, où les moyens pour la modulation dirigé présente un modulateur de lumière, formé par un élément optique-diffractif qui contient une disposition cartésienne bidimensionnelle des cellules individuelles dirigeables, a lesquelles on agit des cellules avec de cristal liquides, anti ferroélectriques, nématiques, smectiques, ou colesteriques ou ferroélectriques, qui permettent une distribution bidimensionnel déclanchée sur la place, de l'énergie d'impulse du rayon de laser.

9. Système de marquage de laser selon la revendication 8, où l'élément optique diffractif contient une hologramme, déclanchée sur la place, avec la modulation de la phase et/ou de l'amplitude, généré par le computer, auquel le rayon de laser, soumis est diffracté de telle manière, de sorte que, par une interférence, se naît sur le support de données (114; 412; 512) une distribution d'énergie d'impulsion correspondante à l'image partielle, qui marque l'image partielle (202; 302, 304; 306,...,312).

10. Système de marquage de laser selon une des revendications 8 à 9, avec un dispositif visant le contrôle du modulateur de lumière, qui produit une répartition discrète, homogène, d'énergie d'impulsion, sur la surface d'un point d'image, qui tombe brusquement a les limites des chaque point d'image, de sorte que, pour chaque point d'image, peut être produit un profil rectangulaire, en accord avec les mesures du point d'image, et avec une unité de conduite de rayon, et qui est composé d'un élément optique diffractif, réglable, celui qui montre une hologramme avec modulation de la phase, et qui détourne le rayon laser dans deux directions de secteur, de sorte que la distribution d'énergie d'impulsion alléguée de chaque image partielle peuvent être produit dans le premier ordre de diffraction de l'hologramme d'élément optique diffractif.

11. Produit de programme informatique visant la mise en oeuvre d'une procédure selon une des revendications 1 à 6 du brevet.
